# EUROPEAN PATENT APPLICATION

(11) **EP 4 265 412 A1**
(43) Date of publication of application: **25.10.2023**
(21) Application number: 21906315.3
(22) Date of filing: 29.11.2021
(51) Int. Cl.: B32B 27/00, B32B 27/36, B32B 7/027

(54) **DECORATIVE SHEET AND METHOD FOR MANUFACTURING DECORATIVE SHEET**

(30) Priority: 17.12.2020 JP 2020209539
(71) Applicant: TOPPAN INC., Tokyo 110-0016 (JP)
(72) Inventor: KIKUCHI Katsuaki, Tokyo 110-0016 (JP); SAITO Yuki, Tokyo 110-0016 (JP)
(74) Representative: TBK
(86) International application number: PCT/JP2021/043639
(87) International publication number: WO 2022/130952

(57) **Abstract**

There is provided a decorative sheet subjected to deep embossing, without occurrence of wrinkling or color change even when processed under relatively high temperature conditions. A decorative sheet (10) includes a transparent thermoplastic resin layer (13) and a topcoat layer (14) which are stacked on a colored film layer (11) in this order. An embossed part (16) is formed in the transparent thermoplastic resin layer (13), and the melting point of the colored film layer (11) is at least 55°C higher than the melting point of the transparent thermoplastic resin layer (13).

## Description

### [Technical Field]

The present invention relates to a decorative sheet and a method for producing a decorative sheet.

### [Background Art]

Conventional decorative sheets, which are applied with an embossed pattern and thus can impart a three-dimensional effect, include a polyolefin resin (such as PP (polypropylene) or PE (polyethylene)) as a base layer in order to acquire a deep embossed design.

In the case of applying deep embossing, there is a problem that interlayer adhesion is weakened due to stress and thermal history, which increases the risk of delamination.

On the other hand, there has been proposed a method in which a step of laminating a surface sheet onto a substrate sheet and a step of embossing the surface sheet are performed as separate steps, so that deviation between the substrate sheet and the surface sheet is suppressed and so that the embossing is performed with high accuracy (for example, see Patent Document 1); and a decorative sheet has been proposed in which a material obtained by adding a compatibilizing rubber to a maleic acid-modified polypropylene resin and an ethylene-propylene copolymer rubber is applied as an adhesive layer of the decorative sheet, so that interlayer adhesion is not weakened even when deep embosses are applied (for example, see Patent Document 2).

### [Citation List]

### [Patent Literature]

[PTL 1] JP 2001-205702 A
[PTL 2] JP2008-179024 A

### [Summary of the Invention]

### [Technical Problem]

However, there is a problem that, when the melting points of a base layer and a clear layer are close to each other, and the surface temperature of a surface to be embossed is high during embossing, the base layer will stretch, which causes wrinkles and color changes, and that, contrarily, when the surface temperature is low, embossing is not clearly formed during embossing. A raw sheet layer which is dark in color has a high heat absorption rate, which causes paper tearing due to heat.

The present invention has been made in order to solve such problems, and an object thereof is to provide a decorative sheet that can be subjected to deep embossing, without occurrence of wrinkles or color changes even when processed under relatively high temperature conditions, and a method for producing such a decorative sheet.

### [Solution to Problem]

In order to achieve the above object, one aspect of the present invention provides a decorative sheet including a transparent thermoplastic resin layer and a topcoat layer which are stacked on a colored film layer in this order, wherein an embossed part is formed in the transparent thermoplastic resin layer, and wherein a difference of the melting point of the colored film layer from the melting point of the transparent thermoplastic resin layer is 55°C or more and 125°C or less.

Another aspect of the present invention provides a method for producing a decorative sheet, including a step of extruding and laminating a transparent thermoplastic resin layer on one surface of a colored film layer; a step of forming a curable resin layer composed of an ultraviolet curable resin layer or a urethane curable resin layer as a topcoat layer on the transparent thermoplastic resin layer; and a step of performing embossing from a surface of the topcoat layer to the transparent thermoplastic resin layer, wherein the melting point of the colored film layer is at least 55°C higher than the melting point of the transparent thermoplastic resin layer, and wherein, in the step of performing embossing, the embossing is performed at a temperature of the topcoat layer set to 115°C or higher and 145°C or lower.

### [Advantageous Effects of the Invention]

According to the present invention, it is possible to easily prepare a decorative sheet which can be subjected to deep embossing, without occurrence of wrinkles or color changes even when processed under relatively high temperature conditions.

### [Brief Description of the Drawings]

FIG. 1 is a cross-sectional view schematically illustrating an example of a decorative sheet according to one embodiment of the present invention.
FIG. 2 is a view for explaining an effect of the decorative sheet according to the embodiment of the present invention.

### [Description of the Embodiments]

Embodiments of the present invention will be described below with reference to the drawings.

Here, the drawings are schematic, and the relationship between the thickness and the planar dimensions, the ratio among the respective thicknesses, and the like are different from the actual ones. Further, the embodiments which will be illustrated below are examples of configurations for embodying the technical idea of the present invention, and the technical idea of the present invention is not limited to the following in terms of materials, shapes and the like of components. Various modifications can be added to the technical idea of the present invention within the technical scope as defined by the claims.

### <Configuration of decorative sheet>

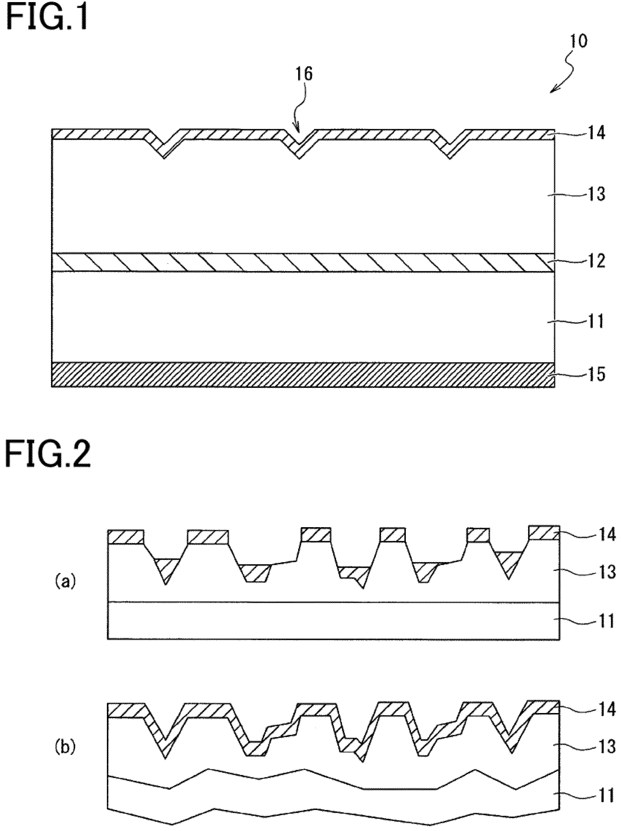

FIG. 1 is a cross-sectional view for explaining one configuration example of a decorative sheet 10 according to the present embodiment.

As illustrated in FIG. 1, the decorative sheet 10 includes a primer layer 15, a colored film layer 11, a pattern printed layer 12, a transparent thermoplastic resin layer 13 and a topcoat layer 14 which are laminated in this order. An embossed part 16 is formed from the topcoat layer 14, which is the outermost layer in the stacking direction of the decorative sheet 10, to the transparent thermoplastic resin layer 13. The respective layers will be described in detail below.

### <Colored film layer>

The colored film layer 11 is a layer that serves as a substrate of the decorative sheet 10. In the present embodiment, a thermoplastic resin can be used as the colored film layer 11. The thermoplastic resin is not particularly limited, and usable examples thereof include: polyolefinic resins including polyolefin resins such as polyethylene, polypropylene, polymethylpentene, polybutene, ethylene-propylene copolymers, ethylene-α-olefin copolymers, and propylene-α-olefin copolymers, and olefinic copolymer resins such as ethylene-vinyl acetate copolymers, ethylene-vinyl alcohol copolymers, ethylene-(meth)acrylic acid (ester) copolymers, and ethylene-unsaturated carboxylic acid copolymer metal neutralized products (ionomers); polyester-based resins such as polyethylene terephthalate, polybutylene terephthalate, polytetramethylene terephthalate, polyethylene naphthalate, polyethylene terephthalate-isophthalate copolymers, 1,4-cyclohexanedimethanol copolymer polyethylene terephthalate, polyarylates, and polycarbonates; acrylic resins such as poly(meth)acrylonitrile, polymethyl (meth)acrylate, polyethyl (meth)acrylate, polybutyl (meth)acrylate, and polyacrylamide; polyamide-based resins such as 6-nylon, 6,6-nylon and 6,10-nylon; styrenic resins such as polystyrene, AS resins and ABS resins; vinyl-based resins such as polyvinyl chloride, polyvinyl acetate, polyvinyl alcohol, polyvinyl acetal, and polyvinyl butyral; fluororesins such as polyvinyl fluoride, polyvinylidene fluoride, polytetrafluoroethylene, ethylene-tetrafluoroethylene copolymers, and ethylene-perfluoroalkyl vinyl ether copolymers; or mixtures, copolymers, composites and laminates of two or more thereof.

In addition, the colored film layer 11, may have added thereto, for example, one or more additives selected from various additives such as a coloring agent, a filler, an ultraviolet absorber, a light stabilizer, a heat stabilizer, an antioxidant, an antistatic agent, a lubricant, a flame retardant, an antibacterial agent, an antifungal agent, an antifriction agent, a light scattering agent and a gloss adjusting agent, according to need.

The thickness of the colored film layer 11 is preferably within the range of 50 µm or more and 90 µm or less. When the thickness of the colored film layer 11 is 50 µm or more, it is possible to prevent deterioration in concealing properties and workability. When the thickness of the colored film layer 11 is 90 µm or less, the colored film layer 11 is not formed to be thicker than necessary, and the production cost of the decorative sheet 10 can be reduced.

Further, the melting point of the colored film layer 11 is at least 55°C higher than the melting point of the transparent thermoplastic resin layer 13 which will be described later. Thus, in the case where the colored film layer 11 contains a polyolefinic resin, it is possible to suppress the occurrence of thermal expansion and contraction, if the surface temperature of the topcoat layer 14 as a surface to be embossed (hereinafter referred to as "embossed surface") during embossing is within the range of about 115°C or higher and 145°C or lower. Embossing can be performed even when the temperature of the embossed surface is about 145°C. The higher the temperature applied during embossing, the deeper the embossing that can be formed, resulting in improved designability.

### <Pattern printed layer>

The pattern printed layer 12 is formed on the colored film layer 11, and is a layer for adding a pattern for imparting designability, and is provided according to need. The pattern printed layer 12 can also be omitted when it can be replaced with coloring of the colored film layer 11. The pattern printed layer 12 is formed using a printing ink, paint or the like obtained by dissolving or dispersing a colorant such as a dye or pigment together with an appropriate binder resin in an appropriate diluent solvent. The printing ink, paint or the like is applied, for example, by various printing methods such as gravure printing, flexographic printing, silk screen printing and offset printing, and various coating methods such as gravure coating and roll coating. As the binder resin, for example, a urethane-based resin, an acrylic resin, a vinyl chloride acetate-based resin, a polyimide-based resin, cellulose nitrate, or a mixture thereof can be used, but the binder resin is, of course, not limited thereto. Any pattern can be used as the pattern, and usable examples thereof include a wood grain pattern, a stone grain pattern, a texture pattern, an abstract pattern, a geometric pattern, characters, symbols, a single solid color, or a combination thereof. In order to improve the concealing properties of the decorative sheet 10, a concealing layer made of an opaque printing ink or paint containing a large amount of an opaque pigment such as titanium dioxide or iron oxide may be provided between the pattern printed layer 12 and the colored film layer 11.

The thickness of the pattern printed layer 12 is preferably within the range of 3 µm or more and 20 µm or less. When the thickness of the pattern printed layer 12 is 3 µm or more, clear printing can be performed. When the thickness of the pattern printed layer 12 is 20 µm or less, the printing workability in the production of the decorative sheet 10 is improved, and the production cost can be suppressed.

In addition, in order to impart various functions, for example, functional additives such as an extender, a plasticizer, a dispersant, a surfactant, a tackifier, an adhesion aid, a desiccant, a curing agent, a curing accelerator, and a curing retarder may be added to the pattern printed layer 12.

The pattern printed layer 12 may include, for example, a solid colored layer for hiding the color and pattern of a base to which the decorative sheet 10 is attached, and a pattern layer for adding a pattern for imparting the designability.

### <Transparent thermoplastic resin layer>

The transparent thermoplastic resin layer 13 is a layer formed on the pattern printed layer 12, and is also a layer provided to impart a function such as impact resistance to the decorative sheet 10. In addition, the transparent thermoplastic resin layer 13 also has a role as an adhesive layer for adhering the pattern printed layer 12 and the topcoat layer 14 to each other.

The thickness of the transparent thermoplastic resin layer 13 is preferably in the range of 38 µm or more and 90 µm or less. When the thickness of the transparent thermoplastic resin layer 13 is within the above numerical range, there is no problem in forming unevenness by embossing, and, sufficient impact resistance and caster resistance effects can be obtained. Alternatively, in terms of designability, the presence of the transparent thermoplastic resin layer 13, together with the pattern printed layer 12, has the effect of giving a sense of texture and depth. Specifically, when the thickness of the transparent thermoplastic resin layer 13 is 38 µm or more, each of impact resistance and caster resistance properties can be obtained. On the other hand, when the thickness of the transparent thermoplastic resin layer 13 is 90 µm or less, productivity at the time of production is improved, which may be advantageous in terms of cost.

As a material for the transparent thermoplastic resin layer 13, for example, a vinyl chloride resin, an acrylic resin, a polyolefinic polypropylene resin or a polyethylene resin, or the like can be used.

Among them, a polyolefinic resin can be preferably used in terms of environmental compatibility, workability and price. In particular, in terms of bending workability, it is important to select materials that will not cause whitening or cracking in portions that are bent.

Preferably, the transparent thermoplastic resin layer 13 alone has a tensile elastic modulus of 1000 MPa or more, particularly 1500 MPa or more. The upper limit of the tensile elastic modulus is not particularly limited, and may be about 2000 MPa.

The tensile elastic modulus can be measured by preparing a transparent polypropylene-based resin sheet having the same thickness and material as those of the transparent thermoplastic resin layer 13. The tensile elastic modulus in the present specification is a value as measured according to the provisions of JIS K 6734 "Plastics-Unplasticized poly(vinyl chloride) sheets-Dimensions and characteristics-Part 2: Sheets of thickness less than 1 mm."

The transparent thermoplastic resin layer 13 may be formed by laminating the transparent polypropylene-based resin on the pattern printed layer 12, for example, by a calendar method, an inflation method, a T-die extrusion method, or the like. An existing film may also be used.

A surface which is a surface of the transparent thermoplastic resin layer 13 and on which the topcoat layer 14 to be described later is formed may be subjected to surface treatment such as corona discharge treatment, ozone treatment, plasma treatment, ionizing radiation treatment, or dichromic acid treatment, according to need. The surface treatment may be carried out according to a conventional method for each treatment.

### <Topcoat layer>

The topcoat layer 14 is a layer formed on the transparent thermoplastic resin layer 13, and is also a layer provided to impart functions such as weather resistance, scratch resistance, stain resistance, and designability to the decorative sheet 10.

As a material for the topcoat layer 14, an ultraviolet curable resin or a urethane curable resin is used. Oligomers and monomers can be used as the ultraviolet curable resin, and, for example, acrylic resins, silicon-based resins, polyester-based resins, urethane-based resins, amide-based resins, and epoxy-based resins can be used.

As the urethane curable resin, for example, a two-part curable urethane resin can be used, and it is more preferable to use an acrylic-urethane block copolymer as a polyol component. As the two-part curable urethane resin, it is preferable to use an aliphatic isocyanate or an alicyclic isocyanate as an isocyanate component thereof from the viewpoint of weather resistance and adhesion. Also, as for the acrylic-urethane block copolymer, the isocyanate component in the urethane portion thereof is preferably an aliphatic isocyanate or an alicyclic isocyanate from the viewpoint of weather resistance and adhesion. Also, an alicyclic isocyanate and an aliphatic isocyanate may be used in combination.

The thickness of the topcoat layer 14 is not particularly limited, but is preferably within the range of 0.1 µm or more and 15 µm or less. When the thickness of the topcoat layer 14 is 0.1 µm or more, the decorative sheet 10 is improved in weather resistance, scratch resistance, and the like. When the thickness of the topcoat layer 14 is 15 µm or less, it is not necessary to use more resin material than necessary, and the cost can be reduced.

As for a method of forming the topcoat layer 14, when an ultraviolet curable resin is used as the curable resin to be formed into the topcoat layer 14, first, the ultraviolet curable resin to be formed into the topcoat layer 14 is applied onto the transparent thermoplastic resin layer 13, and ultraviolet irradiation is performed using a metal halide lamp or the like to cure the ultraviolet curable resin, thereby forming the topcoat layer 14. Then, a deep embossed part 16, which will be described later, is shaped.

Light sources such as an ultra-high pressure mercury lamp, a high pressure mercury lamp, a low pressure mercury lamp, a carbon arc lamp, a black light, and a metal halide lamp can be used as ultraviolet light sources for curing the ultraviolet curable resin. The wavelength of ultraviolet light is preferably in the range of 190 nm or more and 380 nm or less.

When a urethane curable resin is used as the curable resin to be formed into the topcoat layer 14, first, the urethane curable resin to be formed into the topcoat layer is applied onto the transparent thermoplastic resin layer 13. For example, a coating liquid composed of the urethane curable resin is applied by a known coating method such as gravure coating or roll coating. Thereafter, the urethane curable resin is cured to form a cured product, so that the topcoat layer 14 can be obtained. Then, a deep embossed part 16, which will be described later, is shaped.

The topcoat layer 14 may contain various additives including a weather resistant agent, a plasticizer, a stabilizer, a filler, a dispersant, colorants such as a dye and a pigment, a solvent, an ultraviolet absorber, a heat stabilizer, a light stabilizer, an anti-blocking agent, a catalyst scavenger, a colorant, a light scattering agent and a gloss adjusting agent, according to need.

### <Embossed part>

A surface of the ultraviolet curable resin layer or the urethane curable resin layer which serves as the topcoat layer 14 as the outermost layer of the decorative sheet 10 is subjected to embossing (relief-forming using an embossing plate) to shape (provide) the embossed part 16 on the surface of the decorative sheet 10. The decorative sheet 10 can be configured to give a more tactile three-dimensional effect due to the embossed part 16 formed on the surface of the topcoat layer 14. The depth of the embossed part 16 is preferably 60 µm or more and 160 µm or less. When the depth of the embossed part 16 is 60 µm or more, a three-dimensional effect can be sufficiently imparted to the decorative sheet 10. When the depth of the embossed part 16 is 160 µm or less, the depth of the embossed part 16 is smaller than the total thickness of the decorative sheet 10, and the embossed part 16 does not penetrate through the decorative sheet 10.

As an embossing provision method, embossing can be provided by providing embossing on the surface of the decorative sheet 10 in a heated state under conditions that the temperature of a heater that heats the decorative sheet 10 in a non-contact manner is 100°C or higher and 200°C or lower, and that the temperature of a roll that provides residual heat is 70°C or higher and 100°C or lower, and then cooling the formed embossing. In embossing, for example, an irregular shape may be applied to the decorative sheet 10, for example, by applying coating to the depth of a conduit part formed between the ultraviolet curable resin layer or urethane curable resin layer serving as the topcoat layer 14 and the transparent thermoplastic resin layer 13. The embossed part 16 include, for example, wood grain plate conduit grooves, slate surface irregularities, cloth surface textures, satin finish, grain, hairline, and parallel line grooves.

When embossing is provided, the surface temperature of the topcoat layer 14, that is, the embossed surface temperature, is preferably 115°C or higher and 145°C or lower. If the embossed surface temperature is 115°C or higher and 145°C or lower, it is possible to form an embossed part having designability. The embossed surface temperature can be adjusted, for example, by a method of adjusting the temperature of the non-contact heater which heats the decorative sheet 10 or by adjusting the surface temperature of the embossing roll itself.

### <Primer layer>

The primer layer 15 is an anchor coat layer intended to improve resin adhesion. Further, the functions of the primer layer 15 include, in addition to improvement in adhesion, surface stabilization after surface treatment, anticorrosion of a metal surface, provision of tackiness, and prevention of deterioration of an adhesive. As a primer (undercoating agent) forming the primer layer 15, for example, a two-part urethane resin-based primer can be used. The type of primer varies depending on an adherend and intended use. Examples of the adherend include a plate-shaped member made of metal-based or wood-based material. The metal-based materials include, for example, aluminum, steel, stainless steel, and composite panels. The composite panel is, for example, a composite panel including a resin layer as a core material and metal plates (aluminum, galvalume, stainless steel, or the like) attached to both sides of the resin layer. Wood-based materials include MDF (medium density fiberboard), plywood, and particle board.

### <Method for producing decorative sheet>

The decorative sheet 10 is formed by the following procedures.

First, the pattern printed layer 12 is formed on one surface of the colored film layer 11 made of a thermoplastic resin.

Next, the primer layer is formed on the other surface of the colored film layer 11. The primer layer is formed, for example, by coating a urethane-based resin as a primer.

Next, the transparent thermoplastic resin layer 13 is formed on a surface of the pattern printed layer 12. Specifically, a transparent polypropylene-based resin is laminated on the pattern printed layer 12, for example, by a calendar method, an inflation method, a T-die extrusion method, or the like. At this time, materials are selected such that the melting point of the colored film layer 11 is at least 55°C higher than the melting point of the transparent thermoplastic resin layer 13, in the colored film layer 11 and the transparent thermoplastic resin layer 13.

Next, an ultraviolet curable resin is applied to the surface of the transparent thermoplastic resin layer 13 to form an ultraviolet curable resin layer that serves as the topcoat layer 14, and the ultraviolet curable resin layer is cured by ultraviolet irradiation using a metal halide lamp to form the topcoat layer 14.

Next, unevenness formation is applied to a surface of the topcoat layer 14 using an embossing plate, and the embossed part 16 is shaped by in-line deep embossing. The "in-line deep embossing" means that the lamination step for forming the transparent thermoplastic resin layer, the step for forming the ultraviolet curable resin layer that serves as the topcoat layer, and the embossing step are performed on a single processing line. That is, in in-line deep embossing, a series of steps from the lamination step to the embossing step can be performed in-line.

When a urethane curable resin is used as the topcoat layer 14, the urethane curable resin is applied to the surface of the transparent thermoplastic resin layer 13, and deep embossing is performed after the urethane curable resin is cured.

The decorative sheet 10 is formed through the above steps.

### <Effect of present embodiment>

In the decorative sheet 10 according to the present embodiment, the difference between the melting point of the colored film layer 11 and the melting point of the transparent thermoplastic resin layer 13 is 55°C or more. Also, the embossed surface temperature is set to 115°C or higher and 145°C or lower during embossing. Therefore, the occurrence of thermal expansion and contraction and thermal wrinkling can be suppressed. Further, even when a high temperature of about 145°C is applied to the embossed surface, the occurrence of thermal expansion and contraction and thermal wrinkling can be suppressed, so that embossing can be performed at a higher temperature. Therefore, deeper embosses can be formed, and designability can be improved.

That is, if the melting point of the colored film layer 11 and the melting point of the topcoat layer 14 are close to each other, the topcoat layer 14 and even the transparent thermoplastic resin layer 13 may crack during embossing, as shown in FIG. 2(a), i.e., the surface of the decorative sheet 10 may crack.

However, in the decorative sheet 10 according to the present invention, the colored film layer 11 and the transparent thermoplastic resin layer 13 are made of materials such that the melting point of the colored film layer 11 is at least 55°C higher than the melting point of the transparent thermoplastic resin layer 13. That is, when heated, the transparent thermoplastic resin layer 13 tends to become softer than the colored film layer 11. Therefore, as shown in FIG. 2(b), the surface of the decorative sheet 10 on the side where the embossing is performed is softer during embossing. Thus, the transparent thermoplastic resin layer 13 side is more likely to be deformed as compared with the colored film layer 11, and the transparent thermoplastic resin layer 13 can change shape due to embossing, while deformation of the colored film layer 11 is suppressed.

As a result, it is possible to suppress the occurrence of thermal expansion and contraction, thermal wrinkling, and color changes in the colored film layer 11 which is the base layer. As a result, cracking at the topcoat layer 14 and the transparent thermoplastic resin layer 13, i.e., the surfaces of the decorative sheet 10 can be suppressed.

Further, even if a material having relatively high heat resistance is used as the colored film layer 11, thermal expansion and contraction, thermal wrinkling, color changes and the like can be suppressed when the difference between the melting point of the colored film layer 11 and the melting point of the transparent thermoplastic resin layer 13 is 55°C or more. Therefore, a polyester-based material, such as polybutylene terephthalate (PBT) or polyethylene terephthalate (PET), having relatively high heat resistance can be used as the colored film layer 11, and the heat resistance of the colored film layer 11 can be improved. As a result, embossing can be performed at a higher temperature, so that even deeper embosses can be formed more reliably, and designability can be improved.

In addition, the occurrence of thermal expansion and contraction, cracking, and the like can be suppressed in this manner, and thus, even if relatively deep embossing is performed, the state in which the conduit part of the embossing is covered with the topcoat layer 14 is easily maintained, so that the weather resistance can be improved.

### [Examples]

Examples carried out to confirm the effects of the decorative sheet 10 according to the present invention will be specifically described. The present invention is not limited to the following examples.

### <Preparation of specimens of examples and comparative examples>

### (Example 1)

As a colored film layer, a resin layer made of polyethylene terephthalate (PET) as a thermoplastic resin composed of a polyester-based resin having a thickness of 60 µm was used. A pattern was printed and provided on one surface of the colored film layer as a pattern printed layer using a gravure printing machine, and the other surface was coated with a two-part urethane resin-based primer at a basis weight of 1.2 g/m² after drying to form a primer layer.

Next, a transparent polypropylene resin (PP) was extruded and laminated as a transparent thermoplastic resin layer on the pattern printed layer. At this time, the thickness of the transparent thermoplastic resin layer was set to 70 µm. The difference in melting point between the colored film layer and the transparent thermoplastic resin layer (melting point of the colored film layer - melting point of the transparent thermoplastic resin layer) was 95°C.

Next, an ultraviolet curable resin layer was formed on the transparent thermoplastic resin layer, and cured by ultraviolet irradiation using a metal halide lamp to prepare a topcoat.

Next, the surface of the topcoat was embossed. The embossing depth was set to 80 µm. The temperature of the embossing surface during the embossing was 140°C.

By the above procedures, a decorative sheet of Example 1 was prepared.

### (Example 2)

A resin layer made of polybutylene terephthalate (PBT) and having a thickness of 60 µm was used as the colored film layer. A polyethylene resin (PE) having transparency was used as the transparent thermoplastic resin layer, and the thickness of the transparent thermoplastic resin layer was set to 55 µm. The difference in melting point between the colored film layer and the transparent thermoplastic resin layer (melting point of the colored film layer - melting point of the transparent thermoplastic resin layer) was 90°C. The temperature of the embossing surface during the embossing was set to 120°C, and the embossing depth was set to 80 µm. A decorative sheet of Example 2 was prepared in the same manner as in Example 1 except for the above points.

### (Example 3)

A resin layer made of polybutylene terephthalate (PBT) and having a thickness of 50 µm was used as the colored film layer. A polypropylene resin (PE) having transparency was used as the transparent thermoplastic resin layer, and the thickness of the transparent thermoplastic resin layer was set to 80 µm. The difference in melting point between the colored film layer and the transparent thermoplastic resin layer (melting point of the colored film layer - melting point of the transparent thermoplastic resin layer) was 55°C. The temperature of the embossed surface during the embossing was set to 140°C, and the embossing depth was set to 80 µm. A decorative sheet of Example 3 was prepared in the same manner as in Example 1 except for the above points.

### (Example 4)

A resin layer made of polybutylene terephthalate (PBT) and having a thickness of 50 µm was used as the colored film layer. A transparent polypropylene (PP) resin was used as the transparent thermoplastic resin layer, and the thickness of the transparent thermoplastic resin layer was set to 38 µm. The difference in melting point between the colored film layer and the transparent thermoplastic resin layer (melting point of the colored film layer - melting point of the transparent thermoplastic resin layer) was 55°C. The temperature of the embossed surface during the embossing was set to 140°C, and the embossing depth was set to 80 µm. A decorative sheet of Example 4 was prepared in the same manner as in Example 1 except for the above points.

### (Example 5)

A resin layer made of polybutylene terephthalate (PBT) and having a thickness of 50 µm was used as the colored film layer. A transparent polypropylene (PP) resin was used as the transparent thermoplastic resin layer, and the thickness of the transparent thermoplastic resin layer was set to 38 µm. The difference in melting point between the colored film layer and the transparent thermoplastic resin layer (melting point of the colored film layer - melting point of the transparent thermoplastic resin layer) was 55°C. The temperature of the embossed surface during the embossing was set to 115°C, and the embossing depth was set to 55 µm. A decorative sheet of Example 5 was prepared in the same manner as in Example 1 except for the above points.

### (Example 6)

The temperature of the embossed surface during the embossing was changed to 145°C. A decorative sheet of Example 6 was prepared in the same manner as in Example 5 except for the above points.

### (Comparative Example 1)

A resin layer made of polyethylene terephthalate (PET) and having a thickness of 50 µm was used as the colored film layer. A transparent polypropylene (PP) resin was used as the transparent thermoplastic resin layer, and the thickness of the transparent thermoplastic resin layer was set to 38 µm. The difference in melting point between the colored film layer and the transparent thermoplastic resin layer (melting point of the colored film layer - melting point of the transparent thermoplastic resin layer) was 50°C. The temperature of the embossed surface during embossing was set to 145°C, and the embossing depth was set to 55 µm. A decorative sheet of Comparative Example 4 was prepared in the same manner as in Example 6 except for the above points.

### (Comparative Example 2)

The temperature of the embossed surface during embossing was changed to 150°C. A decorative sheet of Comparative Example 4 was prepared in the same manner as in Comparative Example 3 except for the above points.

### (Comparative Example 3)

The temperature of the embossed surface during embossing was changed to 110°C. A decorative sheet of Comparative Example 5 was prepared in the same manner as in Comparative Example 3 except for the above points.

### (Comparative Example 4)

The temperature of the embossed surface during embossing was changed to 115°C. A decorative sheet of Comparative Example 6 was prepared in the same manner as in Comparative Example 3 except for the above points.

### (Comparative Example 5)

A resin layer made of polyethylene resin (PE) and having a thickness of 55 µm was used as the colored film layer. A transparent polypropylene (PP) resin was used as the transparent thermoplastic resin layer, and the thickness of the transparent thermoplastic resin layer was set to 38 µm. The difference in melting point between the colored film layer and the transparent thermoplastic resin layer (melting point of the colored film layer - melting point of the transparent thermoplastic resin layer) was -35°C. The temperature of the embossed surface during embossing was set to 110°C, and the embossing depth was set to 70 µm. A decorative sheet of Comparative Example 7 was prepared in the same manner as in Example 1 except for the above points.

### (Comparative Example 6)

The temperature of the embossed surface during embossing was set to 130°C. A decorative sheet of Comparative Example 8 was prepared in the same manner as in Comparative Example 7 except for the above points.

### (Comparative Example 7)

A resin layer made of polypropylene resin (PP) and having a thickness of 60 µm was used as the colored film layer. A transparent polypropylene (PP) resin was used as the transparent thermoplastic resin layer, and the thickness of the transparent thermoplastic resin layer was set to 70 µm. The difference in melting point between the colored film layer and the transparent thermoplastic resin layer (melting point of the colored film layer - melting point of the transparent thermoplastic resin layer) was 0°C. The temperature of the embossed surface during the embossing was set to 130°C, and the embossing depth was set to 70 µm. A decorative sheet of Comparative Example 9 was prepared in the same manner as in Comparative Example 7 except for the above points.

### (Comparative Example 8)

As the colored film layer, a resin layer made of polyethylene terephthalate (PET) as a thermoplastic resin composed of a polyester-based resin having a thickness of 60 µm was used. A polyethylene resin (PE) was used as the transparent thermoplastic resin layer, and the thickness of the transparent thermoplastic resin layer was set to 40 µm. The difference in melting point between the colored film layer and the transparent thermoplastic resin layer (melting point of the colored film layer - melting point of the transparent thermoplastic resin layer) was 130°C. The temperature of the embossed surface during the embossing was set to 110°C, and the embossing depth was set to 70 µm. A decorative sheet of Comparative Example 10 was prepared in the same manner as in Comparative Example 7 except for the above points.

### <Evaluation method and evaluation criteria>

### <Performance evaluation method>

The following evaluations were performed on the decorative sheets as specimens of Examples 1 to 6 and Comparative Examples 1 to 10 obtained as described above.

### [Evaluation of designability]

The surface of the decorative sheet as a specimen was visually examined to evaluate design impression due to the irregular pattern.

### (Evaluation criteria)

Very Good: There was a design effect due to the unevenness of the uneven pattern.

Good: There was some design effect due to the unevenness of the uneven pattern.

Poor: The unevenness of the uneven pattern were shallow and there was no effect as a design.

The designability evaluation results are indicated in Table 1.

### [Evaluation of thermal expansion and contraction]

For each of the decorative sheets as specimens, lines marking [areas] 100mm in length and width were drawn on the decorative sheet cut into 100 mm squares, and, after heating in an oven at 60°C for 15 minutes, the lengths of the lines in length and width were actually measured. Based on the measurement results, the heating expansion rate was calculated from the following formula.

### (Actually measured value after heating -100 [mm])/100 [mm] × 100 [%]

### (Evaluation criteria)

Good: The heating expansion rate is 5% or less.

Poor: The heating expansion rate is more than 5%.

The thermal expansion evaluation results are indicated in Table 1.

### [Evaluation of deep emboss design]

The decorative sheets of Examples 1 to 4 were prepared by the same method except that only the embossed surface temperature was changed for each of the decorative sheets, and the design was evaluated. The embossed surface temperature was changed between 110°C and 145°C.

### (Evaluation criteria)

Very Good: The transfer of embossing was very good.

Good: The transfer of embossing was fairly good.

Poor: The transfer of embossing took place to some extent.

Fail: No transfer of embossing took place.

The deep embossing design evaluation results are indicated in Table 2.

### [Evaluation of weather resistance]

A weather resistance test was conducted using a sunshine weather meter.

The decorative sheets described in Examples 1 to 4 were each prepared as in-line products and off-line products. (UV irradiation for 20 hours + condensation for 4 hours) treatment was conducted on the prepared decorative sheets, with a number of cycles corresponding to each of 500 hours, 1000 hours, 1500 hours, and 2000 hours, with (UV irradiation for 20 hours + condensation for 4 hours) defined as one cycle. Thereafter, the appearance of the decorative sheet after the treatment was visually observed. Specifically, it was observed whether the appearance of the decorative sheet changed, whether the decorative sheet was whitened, and whether the decorative sheet cracked. The in-line product referred to herein means a decorative sheet prepared by carrying out the step of laminating the transparent thermoplastic resin layer, the step of forming the curable resin layer serving as the topcoat layer, and the embossing step in the same processing line. The off-line product means a decorative sheet prepared by carrying out the step of laminating the transparent thermoplastic resin layer and the step of forming the curable resin layer serving as the topcoat layer in the same line and the embossing step in another processing line.

The weather resistance evaluation results are indicated in Table 3.

### <Evaluation result>

As indicated in Table 1, in the case of Examples 1 to 6 in which the melting point of the colored film layer was at least 55°C higher than the melting point of the transparent thermoplastic resin layer, and embossing was performed at an embossed surface temperature of 115°C or higher and 145°C or lower, both the designability and the thermal expansion were good. In the case of Comparative Examples 1, 2 and 10 in which the difference in melting point between the colored film layer and the transparent thermoplastic resin layer was 55°C or more, but the embossed surface temperature was not within the range of 115°C or higher and 145°C or lower, the thermal expansion was poor.

In the case of Comparative Examples 3 to 9 in which the difference in melting point between the colored film layer and the transparent thermoplastic resin layer was smaller than 55°C, at least one of designability and thermal stretchability was poor even when embossing was performed at an embossed surface temperature of 115°C or higher and 145°C or lower (Comparative Examples 3, 4, 6, 8 and 9).

In addition, as shown in Table 2, a better deep embossing design can be obtained as the embossed surface temperature was higher. Further, it can be seen that the designability can be somewhat obtained when the embossed surface temperature is 115°C or higher and 145°C or lower. Table 2 indicates the evaluation results when the embossed surface temperature was changed for each of the decorative sheets of Examples 1 to 4, and similar results were obtained for all of the decorative sheets of Examples 1 to 4.

Further, as indicated in Table 3, no significant change was observed in either the off-line or in-line formed decorative sheets regardless of the UV irradiation time in the weather resistance test. In addition, it was confirmed that, even when PP or PE was used as the transparent thermoplastic resin layer and PBT or PET, which has higher heat resistance than that of PP or PE, was used as the colored film layer, sufficient weather resistance could be obtained. Table 3 indicates the evaluation results of the weather resistance test for each of the decorative sheets of Examples 1 to 4, and similar results were obtained for all of the decorative sheets of Examples 1 to 4.

**[Table 1]**

| | Transparent thermoplastic resin layer | Colored film layer | Difference in melting point (°C) | Thickness (µm) of transparent thermoplastic resin layer | Thickness (µm) of colored film layer | Embossed surface temperature (°C) | Emboss depth (µm) | Designability | Thermal expansion |
|---|---|---|---|---|---|---|---|---|---|
| Ex. 1 | PP | PET | 95 | 70 | 60 | 140 | 80 | Very Good | Good |
| Ex. 2 | PE | PBT | 90 | 55 | 60 | 120 | 80 | Good | Good |
| Ex. 3 | PP | PBT | 55 | 80 | 50 | 140 | 80 | Very Good | Good |
| Ex. 4 | PP | PBT | 55 | 38 | 50 | 140 | 80 | Very Good | Good |
| Ex. 5 | PP | PBT | 55 | 38 | 50 | 115 | 55 | Good | Good |
| Ex. 6 | PP | PBT | 55 | 38 | 50 | 145 | 55 | Good | Good |
| Comp. Ex. 1 | PBT | PET | 50 | 38 | 50 | 145 | 55 | Fail | Fail |
| Comp. Ex. 2 | PBT | PET | 50 | 38 | 50 | 150 | 55 | Fail | Fail |
| Comp. Ex. 3 | PBT | PET | 50 | 38 | 50 | 110 | 55 | Fail | Good |
| Comp. Ex. 4 | PBT | PET | 50 | 38 | 50 | 115 | 55 | Fail | Good |
| Comp. Ex. 5 | PP | PE | -35 | 38 | 55 | 110 | 70 | Fail | Good |
| Comp. Ex. 6 | PP | PE | -35 | 38 | 55 | 130 | 70 | Good | Fail |
| Comp. Ex. 7 | PP | PP | 0 | 70 | 60 | 130 | 70 | Good | Fail |
| Comp. Ex. 8 | PE | PET | 130 | 40 | 60 | 110 | 70 | Fail | Good |

**[Table 2]**

| Deep emboss design evaluation | |
|---|---|
| Embossed surface temperature | Design evaluation |
| 110°C | Fail |
| 115°C | Poor |
| 120°C | Poor |
| 130°C | Good |
| 135°C | Good |
| 140°C | Very Good |
| 145°C | Very Good |

**[Table 3]**

| | Weather resistance evaluation (sunshine weather) | |
|---|---|---|
| | Off-line product | In-line product |
| 500H | No significant change | No significant change |
| 1000H | No significant change | No significant change |
| 1500H | No significant change | No significant change |
| 2000H | No significant change | No significant change |

Although the embodiments and examples of the present invention have been described above, the decorative sheet of the present invention is not limited to the embodiments and examples described above, and various modifications can be made within the scope where the features of the invention are not impaired.

### [Reference Signs List]

10: Decorative sheet
11: Colored film layer
12: Pattern printed layer
13: Transparent thermoplastic resin layer
14: Topcoat layer
15: Primer layer
16: Embossed part

## Claims

1. A decorative sheet comprising
a transparent thermoplastic resin layer and a topcoat layer which are laminated on a colored film layer in this order, wherein
an embossed part is formed in the transparent thermoplastic resin layer, and wherein
a difference of the melting point of the colored film layer from the melting point of the transparent thermoplastic resin layer is 55°C or more and 125°C or less.

2. he decorative sheet according to claim 1, wherein the colored film layer comprises a polyester-based resin.

3. The decorative sheet according to claim 1 or 2, wherein the embossed part has a depth of 60 µm or more and 160 µm or less.

4. The decorative sheet according to any one of claims 1 to 3, wherein the colored film layer has a thickness of 50 µm or more and 90 µm or less.

5. The decorative sheet according to any one of claims 1 to 4, wherein the transparent thermoplastic resin layer has a thickness of 38 µm or more and 90 µm or less.

6. A method for producing a decorative sheet, comprising:
a step of extruding and laminating a transparent thermoplastic resin layer on one surface of a colored film layer containing a polyolefinic resin;
a step of forming a curable resin layer composed of an ultraviolet curable resin layer or a urethane curable resin layer as a topcoat layer on the transparent thermoplastic resin layer; and
a step of performing embossing from a surface of the topcoat layer to the transparent thermoplastic resin layer, wherein
the melting point of the colored film layer is at least 55°C higher than the melting point of the transparent thermoplastic resin layer, and
in the step of performing embossing, the embossing is performed at a temperature of the topcoat layer set to 115°C or higher and 145°C or lower.
